# EUROPEAN PATENT APPLICATION

(11) **EP 0 537 914 A1**
(43) Date of publication of application: **21.04.1993**
(21) Application number: 92308630.0
(22) Date of filing: 23.09.1992
(51) Int. Cl.: G06F 12/06

(54) **Method and apparatus for phantom serial memory access**

(30) Priority: 16.10.1991 US 777841
(71) Applicant: NATIONAL SEMICONDUCTOR CORPORATION, Santa Clara, California 95052-8090 (US)
(72) Inventor: Lee, R. Jeff, Lawrenceville, Georgia 30244 (US); Watson, Bruce W., Norcross, Georgia 30092 (US)
(74) Representative: Bowles, Sharon Margaret

(57) **Abstract**

A memory device for providing extra memory capabilities to a computer while conserving address space is pin-compatible with a standard 27512 EPROM. In addition to providing non-volatile storage functionally equivalent to a 27512 EPROM, the device also provides one kilobyte of EEPROM storage. The memory device may be used in place of any 27512, 27256, 27128, or 2764 EPROM device, and provides read/write non-volatile storage transparent to the operation of the EPROM.

## Description

### BACKGROUND OF THE INVENTION

This invention relates generally to memory storage and memory mapped I/O devices. It relates specifically to memory mapping techniques and more specifically to memory mapping techniques for conserving address space with serial memory devices.

Most computers and microprocessor based devices have memory mapped storage or I/O devices. The addressing architecture of the microprocessor usually limits the number of memory mapped devices that can be employed, because the microprocessor has a limited number of address lines, which determine the total available address space. The limited address space often severely constrains the size and therefore the complexity of applications which can be run on the computer. For this reason, memory space is treated as a precious commodity by developers of computer software.

To alleviate this problem somewhat, measures can be taken to make more address space available or to limit the address space that a device requires. Other control lines can be used in the decoding logic for memory mapped devices, effectively treating the control lines as extra address lines and thus increasing the available address space. Some I/O devices have multiple data registers and use a control register accessed at certain memory location to determine which data register or set of data registers is accessible at a certain location or locations.

Another technique commonly used for providing extra memory space in many computers and microprocessor based systems is the use of paged memory, or "bank selection". This technique allows the amount of accessible memory to be extended beyond what is directly accessible within the linear address space of a processor or bus architecture. Most implementations of this type use paging or "bank switching" to make up for deficiencies in the addressing capability of a given microprocessor or bus architecture.

In a typical paged memory architecture, a predefined page (bank, block) of memory within the direct addressing range is designed such that it may be dynamically overlaid with alternate or auxiliary pages of memory. This overlay process is accomplished by writing the appropriate data value to dedicated memory (or I/O) location(s) defined as a "page select register(s)". Once a particular page or bank of memory is selected via the page select register, only the desired page is accessible within the overlay region. To access data contained on alternate pages, the desired pages must be individually selected via the page register. A final disadvantage of this technique is that support for data access operations to the memory pages must be designed into the implementation, so this technique is not suitable for retrofit applications.

### SUMMARY OF THE INVENTION

The invention is directed to a method and apparatus for adding extra serial memory capabilities to a computer while conserving address space. A computer configured according to the invention employs serial memory devices that have address spaces overlapping that of other devices, but unlike the prior art, dedicated control lines or dedicated writable register or location are not required. The serial memory device is accessed indirectly by directly accessing the space of another memory device. One device is primary and normally selected; one or more secondary serial devices are selected only after a predetermined series of read operations, which together make up a secondary device access signal, are performed. The access signal can also be made very complex, to provide security protection for the secondary device.

In one embodiment of the invention, a memory device is provided which includes an EPROM, a serial EEPROM and address decoding and control logic. The device is pin compatible with a standard EPROM, and takes up no more address space than the EPROM would by itself, but also provides the extra capabilities of the EEPROM.

A further understanding of the nature and advantages of the invention may be realized by reference to the remaining portions of the specification and drawings.

### BRIEF DESCRIPTION OF THE DRAWINGS

Fig. 1 is a block diagram showing a particular embodiment of the present invention employing a secondary serial memory device;
Fig. 2 is a block diagram showing a particular, embodiment of the present invention employing eight serial memory devices in parallel as secondary memory mapped devices; and
Fig. 3 is a block diagram showing a particular embodiment of the present invention directed to a device pin compatible with a standard EPROM, and providing both EPROM and EEPROM storage.

### DESCRIPTION OF SPECIFIC EMBODIMENTS

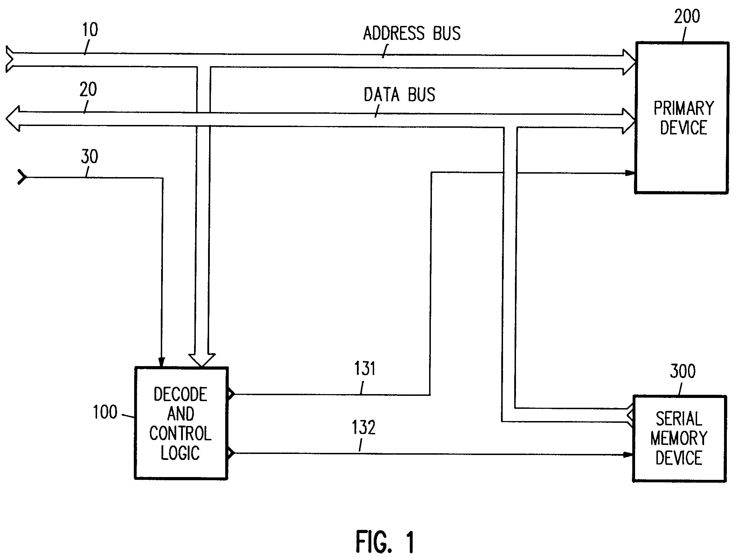

Referring to Fig. 1 there is shown a block diagram of a particular embodiment of the present invention employing a serial memory device as a secondary, or phantom, memory mapped device. Address Bus 10, Data Bus 20, and Control Lines 30 provide address lines, data lines and control lines, respectively, from a microprocessor not shown. The Address Bus is coupled to a Decode and Control Logic 100, and to a Primary Device 200. Decode and Control Logic 100 has control lines 131 to Primary Device 200, and 132 to a Serial Memory Device 300. These control lines may include device enable lines, read/write lines, etc., as required by the particular device. Serial Memory Device 300 may be connected to the data bus as shown, or it may be coupled to the data bus through Decode and Control Logic 100.

In this particular embodiment, a set of memory address locations within the address space of Primary Device 200 are defined as "control switches" for accessing the secondary device, Serial Memory Device 300. The primary device of this example occupies 2K bytes of address space (0 - 7FFh), and the secondary device control switch and read-back locations have been mapped into the upper four byte locations for that device, as in Table 1.

**Table 1**

| Primary Device Address | Control Switch Function |
|---|---|
| 7FFh | Data Read-Back |
| 7FEh | Control Clear |
| 7FDh | Data-In High |
| 7FCh | Data-In Low |
| 7FBh | Device Select |

Secondary device 300 may be accessed only after the host computer has performed a predefined series of sequential reads to primary device 200, which together make up a secondary device access signal. This secondary device access signal generally consists of eight or more steps so it is not readily duplicated by accident during normal accesses of primary device 200. Once the secondary device access signal has been detected by Decode and Control Logic 100, a secondary device access mode may be entered wherein specific control states are latched by Logic 100 when read operations are performed to the control switch locations.

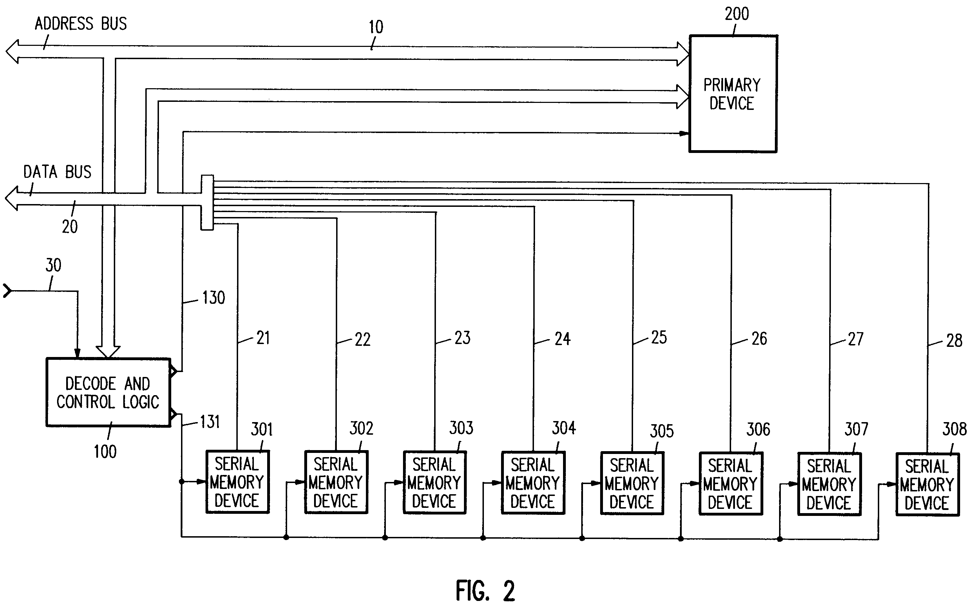

During the secondary device access mode, a read access of the Device Select location will cause the primary device select, one of primary device control lines 131, to become inactive and the secondary device select, one of secondary device control lines 132, to become active. The remaining control locations are now enabled. A read access of the Data-in Low location will cause a logic '0' to be written to secondary device 300. Similarly, a read access of the Data-in High location will cause a logic '1' to be written to secondary device 300. Read access of the Control Clear location will reset the device selects, so that the primary device select is active and the secondary device select is inactive. Also, any 'phantom' operations in progress will be terminated. When data is to be read from secondary device 300, the Data Read-Back location is read while secondary device 300 is selected. Control logic 100 disables data from primary device 200 and enables data from secondary device 300. In this example, only one serial device is being used, so only one data bit is read per operation. A similar embodiment is shown in Fig. 2, in which eight serial memory devices 301-308 are coupled to lines 21-28, respectively, of data bus 20. These secondary devices are operated in parallel, so one full byte is written and read at a time. Additional data read back locations could be added to the control locations so that more than eight secondary devices could be employed.

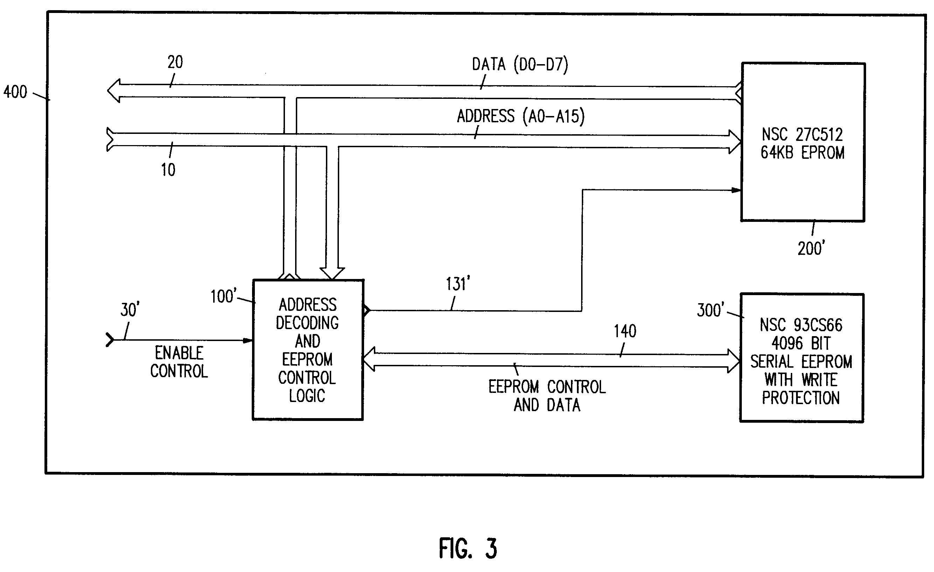

For most implementations, the control switch functions correspond directly to the hardware control signals required to drive the secondary device. For devices which utilize additional control signals additional control switch locations are added. The embodiment of Fig. 3 provides an example of this. Device 400 is a memory device that is pin-compatible with a standard 27512 EPROM. In addition to providing non-volatile storage functionally equivalent to a 27512 EPROM, device 400 also provides one kilobyte of EEPROM storage implemented using the phantom memory techniques described above. Device 400 may be used in place of any 27512, 27256, 27128, or 2764 EPROM device, and provides read/write non-volatile storage transparent to the operation of the EPROM.

Device 400 consists of decode and control logic 100' coupled to address line 10, data line 20, and write enable control 30'. A primary device 200', an NSC 27C512 64 KB EPROM, available from National Semiconductor Corporation of Santa Clara, California, is coupled to address line 10, data line 20, and to decode and control logic 100' through control lines 131'. A secondary device 300', an NSC 93CS66 4096 bit serial EEPROM with write protection, also available from National Semiconductor, is coupled to decode and control logic 100' through control and data lines 140. The operation of device 400 is essentially the same as described for the device of Fig. 1, except that the device of Fig. 4 requires an extra control switch location for a program enable control to secondary device 300'. Device 400 may be used in a variety of applications which require up to 64 KB of PROM and up to 1KB of electrically erasable non-volatile storage. One such application is for personal computer adapter board boot PROMs that also require storage of dynamic configuration data. Another application is for system motherboard BIOS PROMs with integrated dynamic configuration storage. This technique could also be used to allow product program upgrades to be "soft" loaded into secondary memory in the product, providing field upgrades via diskette. Yet another application is for firmware based computer security products with integral storage of passwords and other security data.

It is to be understood that the above description is intended to be illustrative only and not restrictive. Many embodiments and variations will be apparent to those of skill in the art upon reviewing the above description. For example, two secondary devices could be employed together, but rather than doubling the amount of available secondary memory, the second could be used to provide redundant data storage for the first. The scope of the invention should, therefore, be determined with reference to the appended claims, along with the full scope of equivalents to which such claims are entitled.

## Claims

1. In an electronic device employing a first memory mapped device (200) having a first predetermined limited address space, said electronic device capable of performing data transfer operations with addresses, the improvement comprising:
a) a second memory mapped device (300) employed by the electronic device, having a second predetermined address space comprising an overlapping address space contained also within the first address space; and
b) decoder-controller means (100), coupled to the first memory mapped device and to the second memory mapped device, for
i) operating in a primary mode in which data transfer operations by the electronic device to the first address space access the first memory mapped device;
ii) operating in a secondary mode in which at least a predetermined set of data transfer operations within the overlapping address space access the second memory mapped device; and
iii) recognizing a secondary mode enable signal from the electronic device, said secondary mode enable signal comprising more than one predetermined data transfer operation, whereby upon recognition of the secondary mode enable Signal the decoder-controller means enters the secondary mode of operation.

2. The improvement of claim 1, wherein
a) while in the secondary mode the decoder-controller means can recognize a secondary mode disable signal from the electronic device, and upon recognition of the secondary mode disable signal enters the primary mode.

3. The improvement of claim 1 wherein
a) said data transfer operations are selected from the group consisting of read operations and write operations, and
b) the secondary mode enable signal consists solely of read operations.

4. The improvement of claim 3, wherein the secondary mode enable signal comprises at least four read operations.

5. The improvement of claim 3, wherein the secondary mode enable signal comprises at least eight read operations.

6. The improvement of claim 5, wherein the data transfer operations of the secondary mode enable signal are directed to the first address space.

7. The improvement of claim 1, wherein the second memory mapped device has a second predetermined address space contained within the first predetermined address space.

8. A memory storage apparatus for performing memory access operations with and having a pin configuration compatible with a first type of programmable read only memory, said apparatus comprising:
a) a first memory device (200') of the first type of programmable read only memory;
b) a second memory device (400) of an electrically erasable programmable read only memory type;
c) decoder-controller means (100') for decoding a predetermined sequence of read memory access operations performed with the first memory device and for controlling memory access operations with the first and second memory devices, whereby the first memory device is normally enabled for memory access operations and the second memory device is normally disabled for memory access operations, and after the predetermined sequence of read memory access operations is decoded the second memory device is enabled for memory access operations.

9. A method of controlling a first memory mapped device having a first limited predetermined address space and a second memory mapped device having a second predetermined address space including an overlapping address space contained also within the first address space, said memory mapped devices employed by an electronic device capable of performing data transfer operations with addresses, said method comprising the steps of:
a) operating in a primary mode in which data transfer operations by the electronic device to the first address space access the first memory mapped device;
b) recognizing a secondary mode enable signal from the electronic device, said secondary mode enable signal comprising more than one predetermined data transfer operation, whereby upon recognition of the secondary mode enable signal a secondary mode of operation is entered; and
c) operating in the secondary mode, in which least a predetermined set of data transfer operations within the overlapping address space access the second memory mapped device.

10. The method of claim 9, wherein the recognizing step comprises recognizing a secondary mode enable signal comprising at least four data transfer operations.

11. The method of claim 9, wherein the recognizing step comprises recognizing a secondary mode enable signal consisting of read data transfer operations.

12. The method of claim 11, wherein the recognizing step comprises recognizing a secondary mode enable signal comprising at least four read data transfer operations.

13. The method of claim 11, wherein the recognizing step comprises recognizing a secondary mode enable signal comprising at least eight read data transfer operations.
